Europäisches Patentamt

European Patent Office

Office européen des brevets

(19)

(11) Veröffentlichungsnummer: **0 290 084**

**A2**

(12) # EUROPÄISCHE PATENTANMELDUNG

(21) Anmeldenummer: 88200817.0

(51) Int. Cl.4: **B44B 7/00 , B29D 17/00**

(22) Anmeldetag: 27.04.88

(30) Priorität: 08.05.87 DE 3715315

(43) Veröffentlichungstag der Anmeldung:
09.11.88 Patentblatt 88/45

(84) Benannte Vertragsstaaten:
**AT CH DE ES FR GB IT LI**

(71) Anmelder: **Philips and Du Pont Optical Deutschland GmbH**
**Podbielskistrasse 164**
**D-3000 Hannover 1(DE)**

(84) **DE**

(71) Anmelder: **Philips and Du Pont Optical Company**
**Buizerdlaan 2**
**NL-3435 SB Nieuwegein(NL)**

(84) **CH ES FR GB IT LI AT**

(72) Erfinder: **Koop, Herrmann, Dr.**
**Bachstelzenweg 10**
**D-3003 Ronnenberg 1(DE)**
Erfinder: **Schüddekof, Hans**
**Forstgrund 22 (Misburg)**
**D-3000 Hannover 61(DE)**

(74) Vertreter: **Kupfermann, Fritz-Joachim,**
**Dipl.-Ing. et al**
**Wendenstrasse 35 Postfach 10 51 49**
**D-2000 Hamburg 1(DE)**

(54) **Verfahren zur Markierung von plattenförmigen Informationsträgern.**

(57) Bei einem Verfahren zur Markierung von optisch auslesbaren, plattenförmigen Informationsträgern, die beispielsweise in einem Spritzpreßverfahren unter Einsatz wenigstens eines als Preßmatrize dienenden Galvanos hergestellt werden, das über wenigstens zwei galvanoplastische Vervielfältigungsschritte von einem Master abgeleitet wurde, ist zur nachträglichen Identifikation des eingesetzten Galvanos vorgesehen, in dem Galvano eine Markierung einzubringen, welche im später herzustellenden Informationsträger in einem informationsfreien Bereich angeordnet ist und eine Identifikation des markierten Galvanos gestattet.

Fig.1

## Verfahren zur Markierung von plattenförmigen Informationsträgern

Die Erfindung bezieht sich auf ein Verfahren zur Markierung von optisch auslesbaren, plattenförmigen Informationsträgern, die in einem Spritz-, Preß-oder Spritzpreßverfahren unter Einsatz wenigstens eines als Preßmatrize eingesetzten Galvanos hergestellt werden, das über wenigstens einen galvanoplastischen Vervielfältigungsschritt von einem Master abgeleitet wurde.

Für optisch auslesbare, plattenförmige Informationsträger, aber auch beispielsweise für konventionelle Langspielplatten, ist es bekannt, in dem Master eine Markierung vorzusehen. Diese Markierung ist meist die Katalog-Nummer, anhand der das Programm der Platte identifizierbar ist. Die in den Master eingebrachte Markierung bleibt über verschiedene Verfielfältigungsschritte bis hin zur Preßmatrize und schließlich zum abspielbaren Informationsträger erhalten. Diese Markierung gestattet nachträglich eine Identifikation des Programminhaltes des Informationsträgers, auch wenn keine weitere Etikettierung oder dergl. an dem Informationsträger vorhanden ist.

Es ist Aufgabe der Erfindung, ein Verfahren anzugeben, welches es für jeden einzelnen hergestellten plattenförmigen Informationsträger gestattet, wenigstens ein zu seiner Herstellung eingesetztes Galvano nachträglich zu identifizieren. Dies gilt nicht nur unmittelbar für die Preßmatrize, sondern auch für die als Zwischenschritte zwischen dem Master und der Preßmatrize hergestellten Galvanos.

Diese Aufgabe ist erfindungsgemäß dadurch gelöst, daß in wenigstens eines der bei den galvanoplastischen Vervielfältigungsschritten gewonnenen Galvanos eine individuelle Markierung eingebracht wird, welche im später herzustellenden Informationsträger in einem informationsfreien Bereich angeordnet ist und eine Identifikation des markierten Galvanos gestattet.

Bei der Herstellung optisch auslesbarer, plattenförmiger Informationsträger, beispielsweise Compact-Disks, wird zunächst ein Master hergestellt, der im wesentlichen aus einer Glasplatte und einer darauf aufgebrachten Photoresist-Schicht besteht. In der Photoresist-Schicht werden mittels eines Lasers einzelne Bereiche belichtet, die später als längliche Vertiefungen (Pits) in dem plattenförmigen Informationsträger vorhanden sind. Von dem Master wird, nachdem die Photoresist-Schicht entwickelt wurde und die belichteten Stellen herausgelöst wurden, auf galvanischem Wege wenigstens ein Vervielfältigungsschritt vorgenommen. Das so entstandene Galvano könnte bereits, beispielsweise in einem Spritzpreßverfahren, zur Herstellung plattenförmiger Informationsträger eingesetzt werden.

Da eine Preßmatrize jedoch Verschleiß unterliegt und auch aus Sicherheitsgründen, werden von dem so von dem Master gewonnenen Galvano noch einmal mehrere Galvanos hergestellt. Im allgemeinen wird erst das im dritten Vervielfältigungsschritt gewonnene Galvano als Preßmatrize eingesetzt. Wird nun in wenigstens einem der Galvanos, die auf dem Vervielfältigungswege vom Master bis einschließlich zur Preßmatrize hergestellt wurden, eine Markierung nach dem Verfahren eingebracht, so ist diese später auch an dem plattenförmigen Informationsträger vorhanden. Diese Markierung gestattet nachträglich eine Identifikation des markierten Galvanos. Eine solche Rückverfolgung der zur Herstellung eines plattenförmigen Informationsträgers eingesetzten Galvanos ist oftmals wünschenswert, insbesondere um bei Fehlern in einem hergestellten pattenförmigen Informationsträgern prüfen zu können, ob diese bereits in dem Galvano vorhanden waren, und gegebenenfalls das Galvano aussondern zu können. Dies ist von besonderer Bedeutung, da während der Fertigung noch nicht alle Fehler bemerkt werden und evtl. erst in einem späteren Prüfprozeß oder sogar beim Endabnehmer der Fehler bemerkt wird. Es ist dann kaum mehr möglich festzustellen, welche Platten mit einem evtl. beschädigten Galvano hergestellt wurden. Ist jedoch eine Rückverfolgung mittels einer Markierung an dem plattenförmigen Informationsträger möglich, so können alle Informationsträger, welche unter Einsatz des fehlerhaften Galvanos hergestellt wurden, rückverfolgt werden, da sie die gleiche Markierung des defekten Galvanos aufweisen. Auf diese Weise ist nachträglich eine Zuordnung der Galvanos zu den unter ihrem Einsatz hergestellten plattenförmigen Informationsträgern möglich.

Nach einer weiteren Ausgestaltung der Erfindung ist vorgesehen, daß in den Master und jedes der Galvanos, einschließlich der Preßmatrize, die im Vervielfältigungsprozeß zwischen Master und Preßmatrize hergestellt werden, je eine individuelle Markierung eingebracht wird.

Wird in jedem der zur Herstellung eingesetzten Galvanos einschließlich der Preßmatrize, die in dem Vervielfältigungswege vom Master bis hin zur Preßmatrize erzeugt wurden, eine Markierung eingebracht, die das jeweilige Galvano individualisiert, so sind an dem fertig hergestellten plattenförmigen Informationsträger die Markierungen aller zu seiner Herstellung in dem Vervielfältigungswege vom Master bis hin zur Preßmatrize eingesetzten Galvanos rückverfolgbar. Es kann auf diese Weise jedes evtl. fehlerhafte Galvano rückverfolgt werden. Auf diese Weise ist bei Entdeckung eines derartigen Fehlers möglich, alle diejenigen Informationsträger auszusondern, die unter Einsatz des defekten Galvanos hergestellt wurden.

Nach einer weiteren Ausgestaltung der Erfindung ist vorgesehen, daß die Markierung in Form einer Vertiefung eingebracht wird, welche eine Tiefe aufweist, die etwa der Tiefe einer Informationsstruktur in dem später herzustellenden Informationsträger entspricht.

Bei dieser Größenordnung der Tiefe der Vertiefungen ist zum einen sichergestellt, daß beispielsweise in einem Spritzprozeß die Markierungen noch nicht zu einer Störung des Materialflusses während des Spritzpreßprozesses führen. Andererseits ist eine noch geringere Tiefe nicht wünschenswert, da die eingebrachten Markierungen noch lesbar sein sollen. Werden die Markierungen in genügender Breite aufgebracht, so hat sich erwiesen, daß sie auch durch eine gegebenenfalls auf das Galvano aufgebrachte, als Korrosionsschicht dienende dünne, matte Nickelschicht hindurch lesbar bleiben. Dies ist wichtig, da die Galvanos im allgemeinen mit einer solchen Schutzschicht gelagert werden und auch später nach dem Verfahren eine Rückverfolgung des Galvanos möglich sein soll. Dies bedingt, daß die Markierung, die in das Galvano eingebracht wurde, auch nach Aufbringung der Schutzschicht noch lesbar ist.

Die Markierungen, welche in ein Galvano eingebracht werden, können sowohl in ein ein Positiv des Masters darstellendes Galvano, wie auch ein ein Negativ des Masters darstellendes Galvano eingebracht werden.

Eine auf der die Informationsstruktur tragenden Seite des Informationsträgers vorgesehene Reflexionsschicht erhöht gegebenenfalls die Lesbarkeit der Markierungen. Die Markierungen werden im allgemeinen auf der die Informationsstruktur aufweisenden Seite des Informationsträgers und nur in Sonderfällen auf der Gegenseite vorgesehen sein.

Nach einer weiteren Ausgestaltung der Erfindung ist vorgesehen, daß die Markierung in Form einer Vertiefung eingebracht wird, welche eine Tiefe zwischen 0,1μm und 3μm, vorzugsweise 1μm, aufweist.

Die meisten marktüblichen optisch auslesbaren, plattenförmigen Informationsträger weisen eine Informationsstruktur mit einer Tiefe von weniger als 1μm auf. Dies gilt beispielsweise auch für Compact-Disks. Die in die Galvanos zur Herstellung derartiger plattenförmiger Informationsträger eingebrachten Markierungen weisen vorteilhafterweise eine Tiefe zwischen 0,1μm und 3μm auf. Als besonders vorteilhaft hat sich eine Tiefe der Markierungen von etwa 1μm erwiesen. Die Markierungen stören dann den Spritzpreßprozeß nicht, sind aber gleichwohl bei genügender Breite gut lesbar.

Nach einer weiteren Ausgestaltung der Erfindung ist vorgesehen, daß die Vertiefung mittels Laser eingebracht wird. Da bereits in dem Herstellungsprozeß des Masters ein Laser eingesetzt wird, ist dessen Einsatz zur zusätzlichen Einbringungen de Markierungen sowohl in dem Master wie auch in den Galvanos vorteilhaft. Die Markierungen können aber auch beispielsweise elektrochemisch, mechanisch durch Eindrücken oder durch spanabhebende Arbeit eingebracht werden.

Nach einer weiteren Ausgestaltung der Erfindung ist vorgesehen, daß bei einem mit einer Schutzlack-Schicht versehenen Nickel-Galvano zur Einbringung der Vertiefung der Laserstrahl auf eine Tiefe direkt unterhalb des Schutzlackes fokussiert und seine Wellenlänge so gewählt wird, daß die Energie des Laserlichtes vorwiegend vom Nickel absorbiert wird.

Die auf oben beschriebene Art und Weise vom Master gewonnenen Galvanos, einschließlich der Preßmatrize, bestehen im allgemeinen aus Nickel. Auf diese Nickel-Galvanos wird oftmals eine Schutzlack-Schicht aufgebracht, damit bei der Lagerung der Galvanos diese nicht beschädigt werden, verschmutzen oder oxydieren. Es besteht der Wunsch, die in die Galvanos einzubringenden Markierungen auch noch nach der Aufbringung der Schutzlack-Schicht vorzusehen. Dies kann vorteilhafterweise dadurch geschehen, daß der Laserstrahl zur Einbringung der Vertiefungen auf eine Tiefe direkt unterhalb des Schutzlackes fokussiert wird. Wird außerdem seine Wellenlänge so gewählt, daß die Energie des Laserlichtes vorwiegend vom Nickel absorbiert wird, so kann in das Nickel eine Vertiefung eingebracht werden, ohne die darüber aufgebrachte Schutzlack-Schicht zu beschädigen. Die Schutzlack-Schicht bleibt dann erhalten und deckt weiterhin das Nickel-Galvano vollständig ab. Dieses ist deshalb von besonderem Vorteil, weil auf diese Weise bei der Einbringung der Vertiefung kein Absaugen des verdampften Nickels erfolgen muß, da das mittels des Lasers in seiner Phase umgewandelte Nickel-Material sich nicht nach außen ausbreiten kann, sondern sich nur unterhalb der Klarlack-Schicht ausbreiten und gegebenenfalls etwas in diese eindiffundieren kann, was jedoch nicht stört, da die Klarlack-Schicht vor Verwendung des Galvanos wieder entfernt wird. Auch muß die Einbringung der Vertiefung nicht unter Rein-Raumbedingungen erfolgen, da infolge der geschlossenen Schutzlack-Schicht keine Fremdkörper von außen bis zum Nickel-Galvano vordringen können. Auf diese Weise ist die Einbringung der Markierungen wirtschaftlich vorzunehmen, da weder Absaugmaßnahmen noch Rein-Raumbedingungen vorzusehen sind, welche immer mit hohem Aufwand verbunden sind.

Die Erfindung wird anhand des in der Zeichnung dargestellten Ausführungsbeispieles näher erläutert. Es zeigen:

Fig. 1 einen optisch auslesbaren, plattenförmigen Informationsträger in Form einer Compact-Disk von der Ausleseseite her,

Fig. 2 einen Schnitt durch einen Teilbereich eines Nickel-Galvanos mit Schutzlack-Schicht.

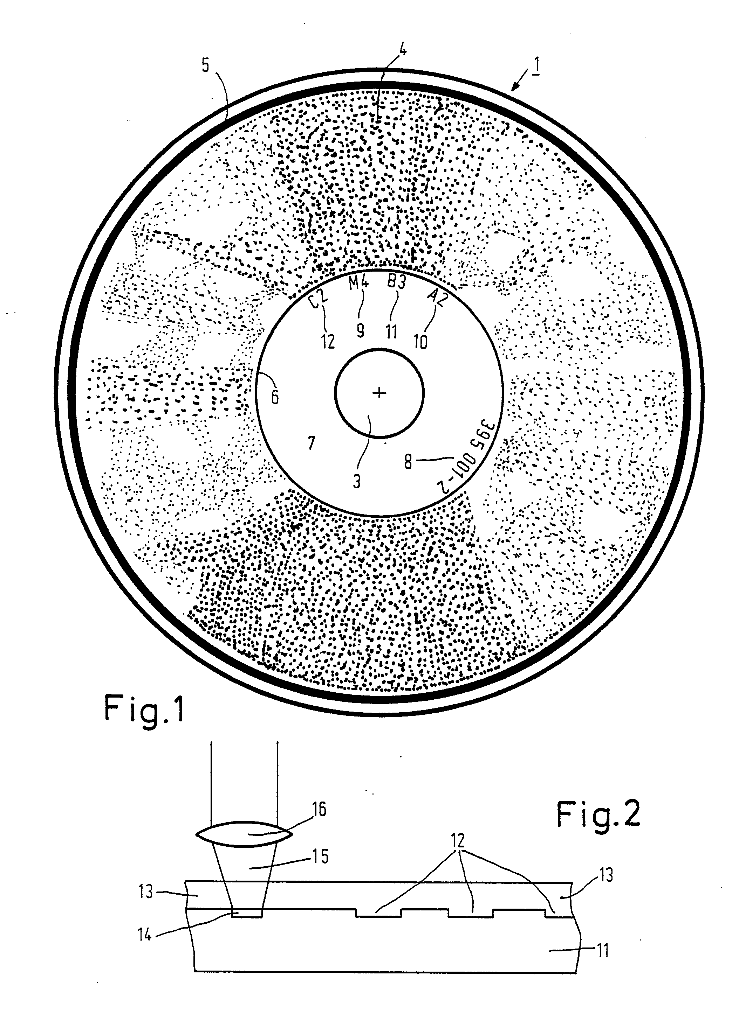

In Fig. 1 ist als Ausführungsbeispiel für einen optisch auslesbaren plattenförmigen Informationsträger eine Compact-Disk 1 in vergrößerter Form dargestellt. Eine solche Compact-Disk besteht im wesentlichen aus einer Polycarbonat-Scheibe, in die auf einer Seite ein Informationsstruktur 4 eingebracht ist. Diese Informationsstruktur wird mit einer Reflexionsschicht versehen, welche wiederum in in der Figur nicht näher dargestellter Weise mit einer Schutzlack-Schicht abgedeckt ist. Die in der Figur dargestellte Compact-Disk 1 ist von der Ausleseseite her dargestellt. Dies ist diejenige Seite der Polycarbonat-Scheibe, die der die Information tragen den Seite gegenüberliegt. Von dieser Seite her wird die Informationsstruktur durch die Polycarbonat-Scheibe hindurch ausgelesen. Der plattenförmigen Informationsträger ist mit einem zentral angeordneten Mittelloch 3 versehen. Derjenige Bereich, in dem die Informationsstruktur 4 vorgesehen ist, erstreckt sich ringförmig konzentrisch zu dem Mittelloch 3 und reicht außen fast bis an den äußeren Rand des Informationsträgers. Im inneren Bereich erstreckt sich die Informationsstruktur nur etwa bis zu einem Drittel des Gesamt-Radius des Informationsträgers, so daß zwischen Mittelloch 3 und dem innersten Radius der Informationsstruktur 6 ein ringförmiger informationsfreier Breich 7 bleibt. In diesem Bereich 7, der im allgemeinen ebenfalls verspiegelt ist, ist oftmals eine Katalog-Nummer 8 vorgesehen, welche eine Identifikation des auf dem Informationsträger in der Informationsstruktur vorhandenen Programmes gestattet. Diese Markierung 8 wird in oben beschriebener Weise bereits in den Master eingebracht und bleibt über die Vervielfältigungsschritte der Galvanos hinweg bis zum plattenförmigen Informationsträger erhalten. Insbesondere wenn der Bereich 7 wenigstens im Bereich der Markierungen 8 auch mit einer Reflexionsschicht versehen ist, sind die Markierungen 8 bei genügender Größe mit bloßem Auge erkennbar.

Bei dem Verfahren nach der Erfindung werden nun sowohl in den Master wie auch in wenigstens eines der nachfolgenden Galvanos jeweils individualisierende Markierungen eingebracht. In diesem Ausführungsbeispiel wurde in in der Figur nicht dargestellter Weise von einem Master zunächst ein erstes Galvano, von diesem ein zweites und von diesem wiederum ein drittes Galvano gewonnen. Das dritte Galvano wurde dann als Preßmatrize eingesetzt. Gemäß dem Verfahren nach der Erfindung sind nun sowohl der eingesetzte Master wie auch die drei im weiteren Vervielfältigungsprozeß erzeugten Galvanos mittels je einer in sie eingebrachten Markierung rückverfolgbar. Die Markierungen wurden in oben beschriebener Weise in die Galvanos eingebracht, und zwar im informationsfreien Bereich 7. In Fig. 1 sind vier Markierungen 9, 10, 11 und 12 dargestellt. Die Markierung 9 ist in diesem Ausführungsbeispiel die Markierung für die Nummer des Masters, hier gekennzeichnet mit "M4". Die Markierung 10 gibt die Nummer des ersten Galvanos an, hier "A2", das von dem Master gewonnen wurde. Von diesem Galvano wiederum wurde ein zweites Galvano gewonnen, hier "B3". Das wieder um von diesem gewonnene, dritte Galvano, hier "C2", wurde bereits als Preßmatrize eingesetzt. Die in die Galvanos eingebrachten Markierungen sind jeweils über die ihnen noch nachfolgenden Vervielfältigungsschritte bis hin zum plattenförmigen Informationsträger weiter vervielfältigt worden und sind in dem informationsfreien Bereich 7 des Informationsträgers eingeprägt. Auch für die Markierungen 9 bis 12 gilt, daß sie in einer solchen Größe vorgesehen sind, daß sie mit bloßem Auge erkennbar sind. Die Markierungen weisen eine Tiefe auf, die etwa der der Informationsstruktur entspricht. Die Lesbarkeit der Markierungen ist besonders gut, wenn wenigstens derjenige Bereich des informationsfreien Bereiches 7, in dem sie angebracht sind, ebenfalls mit der Reflexionsschicht versehen ist. Die Markierungen 9 bis 12 gestatten also auch im Nachhinein eine Rückverfolgung des Masters und aller anschließend im Vervielfältigungsprozeß gewonnenen Galvanos, welche an dem Herstellungsprozeß des Informationsträgers beteiligt waren. Weist der Informationsträger einen Fehler auf, welche auf einen Fehler des Masters oder eines nachfolgenden Galvanos schließen läßt, so können diese überprüft werden. Ist ein fehlerhaftes Galvano bzw. ein fehlerhafter Master identifiziert, so können alle weiteren Platten, bei deren Herstellung der Master oder das Galvano beteiligt waren, ebenfalls nachträglich identifiziert werden.

In Fig. 2 ist ein Teilbereich eines Nickel-Galvanos, das mit einer Schutzschicht versehen ist, im Schnitt dargestellt. Das Nickel-Galvano 11 ist in einem Teilbereich des in Fig. 2 dargestellten Ausschnittes mit einer Informationsstruktur 12 versehen. Diese Informationsstruktur weist einzelne Vertiefungen auf. In einem übrigen Bereich neben dem Informationsbereich ist die Oberfläche des Nickel-Galvanos glatt. Dieser Bereich und der informationstragende Bereich sind mit einer Schutzlack-Schicht 13 versehen.

Gemäß dem Verfahren wird das Nickel-Galvano 11 durch die Schutzschicht hindurch mit einer Markierung 14 versehen. Die Markierung 14 liegt im informationsfreien Bereich. Die Einbringung der Markierung geschicht in in Fig. 2 lediglich -

schematisch dargestellter Art und Weise mittels eines Laserstrahltes 15, welcher mittels einer Optik 16 auf einen Bereich des Nickel-Galvanos 11 fokussiert ist, welcher dicht unterhalb der Schutzlack-Schicht 13 liegt. Auf diese Weise wird durch Phasenumwandlung des Nickel-Materials die Vertiefung 14 eingebracht. Bei geeigneter Wahl der Wellenlänge des Laserlichtes wird dieses vor allem vom Nickel-Material, weniger jedoch vom Material des Schutzlackes absorbiert. Dieses führt dazu, daß die Schutzlack-Schicht 13 oberhalb der eingebrachten Vertiefung 14 erhalten bleibt. Dies hat vor allem den Vorteil, daß das verdampfte Nickel-Material nicht nach außen wegdiffundieren kann, sondern unterhalb der Schutzlack-Schicht 13 bleibt und gegebenenfalls teilweise in diese eindiffundiert. Da auf diese Weise kein Nickel-Material nach außen gelangt, ist es nicht erforderlich, dieses abzusaugen. Ebenso muß nicht unter Rein-Raumbedingungen gearbeitet werden, da die Schutzlack-Schicht 13 geschlossen bleibt und keine Fremdkörper auf die Oberfläche des Nickel-Galvanos 11 gelangen können.

Das in Fig. 2 dargestellte Nickel-Galvano, das nun also neben der Informationsstruktur zusätzlich eine Markierung aufweist, welche eine spätere Identifizierung des Galvanos gestattet, kann nun entweder selbst als Preßmatrize eingesetzt werden, oder es können von diesem Galvano über gegebenenfalls mehrere Vervielfältigungsschritte hinweg weitere Galvanos gewonnen werden, von denen eines als Preßmatrize eingesetzt wird. In jedem Falle wird in einem mittels eines solchen, als Preßmatrize eingesetzten Galvanos hergestellten Informationsträger zusätzlich zu der Informationsstruktur 12 auch die Markierung 14 eingebracht. Eine solche Markierung kann dann beispielsweise wie in dem in Fig. 1 dargestellten plattenförmigen Informationsträger 1 als Markierungen 9 bis 12 vorgesehen sein.

Abgesehen davon, ob das Galvano, in das die Markierung eingebracht wurde, ein Positiv oder ein Negativ des Masters darstellt, ist die Markierung in dem späteren plattenförmigen Informationsträger als Vertiefung oder als Erhebung vorhanden. Dies spielt jedoch weder optisch noch im Fertigungsprozeß eine wesentliche Rolle, da sich an den optischen Eigenschaften, die ein Erkennen der Markierung im wesentlichen infolge von Brechung des optischen Lichtes gestatten, nichts ändert und auch im Fertigungsprozeß eine Störung des Spritzpreßprozesses des flüssigen Polycarbonates nicht eintritt, da die Vertiefung oder Erhebung in jedem Falle nur eine Tiefe bzw. Höhe von maximal einigen μm aufweist.

## Ansprüche

1. Verfahren zur Markierung von optisch auslesbaren, plattenförmigen Informationsträgern, die in einem Spritz-, Preß-oder Spritzpreßverfahren unter Einsatz wenigstens eines als Preßmatrize eingesetzten Galvanos hergestellt werden, das über wenigstens einen galvanoplastischen Vervielfältigungsschritt von einem Master abgeleitet wurde, dadurch gekennzeichnet, daß in wenigstens eines der bei den galvanoplastischen Vervielfältigungsschritten entstandenen Galvanos eine individuelle Markierung eingebracht wird, welche im später herzustellenden Informationsträger in einem informationsfreien Bereich angeordnet ist und eine Identifikation des markierten Galvanos gestattet.

2. Verfahren nach Anspruch 1, dadurch gekennzeichnet, daß in den Master und in jedes der Galvanos, einschließlich der Preßmatrize, die im Vervielfältigungsprozeß zwischen Master und Preßmatrize hergestellt werden, je eine individuelle Markierung eingebracht wird.

3. Verfahren nach Anspruch 1 oder 2, dadurch gekennzeichnet, daß die Markierung in Form einer Vertiefung eingebracht wird, welche eine Tiefe aufweist, die etwa der Tiefe einer Informationsstruktur in dem später herzustellenden Informationsträger entspricht.

4. Verfahren nach Anspruch 1 oder 2, dadurch gekennzeichnet, daß die Markierung in Form einer Vertiefung eingebracht wird, welche eine Tiefe zwischen 0,1μm und 3μm, vorzugsweise 1μm, aufweist.

5. Verfahren nach Anspruch 3 oder 4, dadurch gekennzeichnet, daß die Vertiefung mittels Laser eingebracht wird.

6. Verfahren nach Anspruch 5, dadurch gekennzeichnet, daß bei einem mit einer Schutzlack-Schicht versehenen Nickel-Galvano zur Einbringung der Vertiefung der Laserstrahl auf eine Tiefe direkt unterhalb des Schutzlackes fokussiert und seine Wellenlänge so gewählt wird, daß die Energie des Laserlichtes vorwiegend vom Nickel absorbiert wird.

Fig.1

Fig.2